# EUROPÄISCHE PATENTSCHRIFT

(11) **EP 1 484 268 B1**
(45) Veröffentlichungstag und Bekanntmachung des Hinweises auf die Patenterteilung: **28.06.2006**
(21) Anmeldenummer: 04009183.7
(22) Anmeldetag: 17.04.2004
(51) Int. Cl.: B65G 19/26

(54) **Mitnehmer zur Verwendung in Verpackungsmaschinen**
Pusher for packaging machines
Poussoir pour machines d'emballage

(30) Priorität: 06.06.2003 DE 20308865 U
(43) Veröffentlichungstag der Anmeldung: 08.12.2004
(73) Patentinhaber: Pfankuch Maschinen GmbH, 22926 Ahrensburg (DE)
(72) Erfinder: Pfankuch, Claus Karl, 22359 Hamburg (DE)
(74) Vertreter: Fleck, Thomas

(56) Entgegenhaltungen:
- EP-A- 0 474 973
- EP-A- 0 906 882
- EP-A- 1 086 911
- DE-A- 3 634 712
- FR-A- 2 408 996
- US-A- 5 165 523

## Beschreibung

Die Erfindung betrifft einen Mitnehmer gemäß dem Oberbegriff des Anspruchs 1.

Es ist bekannt, daß insbesondere bei der maschinellen Verarbeitung von Papierprodukten, wie bspw. Zeitungen, Flugblättern, Werbeprospekten, Beipackzetteln für Arzneimittel oder ähnlichem, an Zusammentrag- und Verpackungsmaschinen an z. B. Ketten befestigte Mitnehmer den Transport der Produkte übernehmen. Diese Mitnehmer sind in unterschiedlichsten Ausführungen an Kettengliedern fest oder insgesamt schwenkbar angeordnet, um z. B. im Wendepunkt eines Kettenrades durch eine Hebelanordnung umgelegt zu werden siehe z.B. das Dokument EP-B-0 906 882. In allen Fällen bilden Mitnehmer, die an Ketten oder auf andere Weise an einem Transportmechanismus befestigt sind, eine Gefahr für das die entsprechenden Maschinen bedienenden Bedienpersonal. Quetschungen und auch schwerwiegende Schnittverletzungen können auftreten, wenn eine Person mit einem Körperteil, insbesondere ihrer Hand, in den Bereich der auf dem Transportsystem umlaufenden Mitnehmer gerät. Solchen Verletzungen ist bischer nur durch den Einsatz aufwendiger Sicherheitskupplungen mit einer Zwangsabschaltung der laufenden Maschine zu begegnen.

Aus der EP 1 086 911 A1 ist ein Mitnehmer mit den Merkmalen des Oberbegriffs des Anspruchs 1 bekannt. Auch bei diesem Mitnehmer verschwenkt der Mitnehmerhebel bei Auftreffen eines Hindernisses auf die Mitnahmekante in eine Sicherheitsstellung. In der Sicherheitsstellung wird der Mitnehmerhebel nicht aktiv gehalten, sondern verbleibt dort lediglich aufgrund seiner um den Drehpunkt angelegten Gewichtsverteilung. Schlimmstenfalls kann der Mitnehmerhebel in einer zwischen der Mitnehmerstellung und einer vollständig eingeklappten Sicherheitsstellung liegenden, undefinierten Zwischenstellung verbleiben. Ferner ist der Mechanismus zum Aufrichten der Mitnehmer am Ende der Transportstrecke kompliziert und störungsanfällig.

Es ist daher **Aufgabe** der Erfindung, einen Mitnehmer der eingangs genannten Art dahingehend weiterzubilden, daß er am Ende der Transportstrecke auf einfache Weise, insbesondere auch automatisch, wieder aufgerichtet werden kann.

Diese Aufgabe wird **gelöst** durch einen Mitnehmer mit den Merkmalen des Anspruchs 1.

Der Mitnehmer ist allgemein zweiteilig aufgebaut, wobei ein Grundkörper an einem Transportsystem einer Maschine, bspw. an einer Kette oder an zwischen zwei Ketten oder Seilen verlaufenden Montageachsen, festlegbar ist.

An dem Grundkörper ist ein Mitnehmerhebel schwenkbar gelagert, wobei der Mitnehmerhebel wenigstens zwischen einer ausgeschwenkten Mitnahmestellung, in der der Mitnehmerhebel bei an dem Transportsystem montierten Mitnehmer quer und vorzugsweise im wesentlichen senkrecht zu einer Transportrichtung steht und in der er zu transportierendes Material, bspw. Papier, mitnehmen kann, und einer eingeschwenkten Sicherheitsstellung, in der der Mitnehmerhebel bei an dem Transportsystem montierten Mitnehmer im wesentlichen parallel zu der Transportrichtung liegt und nicht mehr quer zu der Transportrichtung absteht, verschwenkt werden kann. So kann bei Auftreffen auf ein Hindernis, der ansonsten eine Gefahr darstellende Mitnehmerhebel in die Sicherheitsstellung verschwenken, in der er keine Gefahr mehr darstellt. Auch kann bei einem auftretenden Stau in der Maschine der Mitnehmerhebel verschwenken, die Maschine, und insbesondere die Mitnehmer, werden durch einen solchen Stau nicht beschädigt.

Damit der Mitnehmer dennoch eine Last transportieren kann, und der Mitnehmerhebel nicht bei geringstem Widerstand aus der Mitnahmestellung in die Sicherheitsstellung verschwenkt wird, ist ein Federmittel vorgesehen, welches den Mitnehmerhebel in seiner Mitnahmeposition bis zum Auftreten einer die Federkraft übersteigenden Gegenkraft hält. Die Federkraft ist dabei so ausgelegt, daß der Mitnehmerhebel die zu transportierenden Gegenstände sicher mitnehmen kann, jedoch bei Auftreffen auf ein Hindernis, bspw. eine Hand einer Bedienperson, ohne Verletzungsgefahr gegen die Federkraft sicher in die Sicherheitsstellung verschwenkt.

Der gemäß den Merkmalen des kennzeichnenden Teils des Anspruchs 1 weitergebildete Mitnehmer hat den Vorteil, daß durch den in der Sicherheitsstellung des Mitnehmerhebels zwischen der Hinterkante und der Transportrichtung gebildeten Eingriffsraum ein Aufrichtmittel in diesen Raum eingreifen und den eingeschwenkten Mitnehmer wieder aufrichten kann. Dieses Aufrichten erfolgt bspw. in einem Umkehrpunkt des Transportsystems.

Mit Vorteil hält, wie gemäß Anspruch 2 vorgeschlagen, das Federmittel den Mitnehmerhebel auch dann in Position, wenn dieser in die Sicherheitsstellung verschwenkt worden ist. Dies verhindert, daß der einmal eingeschwenkte Mitnehmerhebel aus der Sicherheitsstellung verfrüht ausschwenkt und eventuell doch noch eine Gefahr für eine Bedienperson darstellt. Erst wenn eine die Federkraft übersteigende Gegenkraft aufgebracht wird, wird der Mitnehmerhebel gewollt wieder in die Mitnahmestellung verschwenkt und in dieser durch die Federkraft des Federmittels gehalten.

Eine weitere Erhöhung der Sicherheit ergibt sich, wenn, wie gemäß Anspruch 3 vorgeschlagen, der Mitnehmerhebel gegen die Federkraft aus der Sicherheitsstellung hinaus noch weiter entgegen der Mitnahmestellung verschwenkbar ist. Auf diese Weise kann auch noch ein eventuell vorstehender letzter Rest des Mitnehmerhebels gefahrlos aus der Gefahrenzone verschwenkt werden. Ein Rückfedern des Mitnehmerhebels ist aus einer solchen überschwenkten Position erwünscht, damit er einfach (auch automatisch) wieder aufgerichtet werden kann.

Eine einfache Form der schwenkbaren Lagerung des Mitnehmerhebels an dem Grundkörper läßt sich mit einer die beiden Elementen durchragenden Achse realisieren.

Um ein Überschwenken des Mitnehmerhebels aus der Mitnahmestellung heraus in die der Sicherheitsstellung entgegengesetzte Richtung zuverlässig zu verhindern, wird vorgeschlagen, daß Grundkörper und Mitnehmerhebel gemäß Anspruch 4 jeweils Flächen aufweisen, die im Zusammenspiel einen ein solches Überschwenken verhindernden Anschlag bilden.

Gemäß einer weiteren in Anspruch 5 angegebenen Weiterbildung der Erfindung ist in dem Grundkörper eine Nut ausgebildet, in der ein Lagerabschnitt des Mitnehmerhebels aufgenommen ist, wobei der Mitnehmerhebel in dem Lagerabschnitt einen, dem Boden der Nut allgemein zugewandten Haltenocken aufweist und als Federmittel am Grund der Nut ein an dem Haltenocken angreifendes Federelement angeordnet ist. Dies ist eine einfache und für verschiedentliche Gestaltungsmöglichkeiten offene konstruktive Variante. Wenn der Haltenocken dann wie in Anspruch 6 angegeben aufgebaut ist, kann eine federnde Haltewirkung auf einfache Weise in den beiden oben genannten Stellungen des Mitnehmerhebels bewirkt werden. Als einfaches Federelement hat sich die in Anspruch 7 angegebene Federzunge herausgestellt. Aufgrund ihrer einstückigen Ausbildung mit dem Grundkörper kann sie einfach mit diesem zusammen hergestellt werden, und es entfällt die ansonsten erforderliche Montage eines separaten Federelementes.

Besonders einfach läßt sich ein erfindungsgemäßer Mitnehmer realisieren, wenn der Grundkörper und/oder der Mitnehmerhebel aus Kunststoff bestehen. Kunststoff kann einfach durch Spritzgießen zu den gewünschten Teilen geformt werden. Die Art des Kunststoffes wird anhand der zu erwartenden Beanspruchungen nach seinen Eigenschaften gewählt. Dabei ist darauf zu achten, daß er einem Verschleiß durch die Bewegung der Teile und den sonstigen Beanspruchungen gut standhalten können soll.

Ein entsprechend den Merkmalen des Anspruchs 8 ausgebildeter Mitnehmer bietet den Vorteil, daß dieser einfach in einem Transportsystem befestigt werden kann. Es können dabei auch zwei oder mehr Mitnehmer an einer Achse festgelegt werden, so daß durch Anordnung einer entsprechenden Anzahl von Mitnehmern eine gewünschte Arbeitsbreite abgedeckt werden kann. Die Achsen, an denen die Mitnehmer angeordnet sind, können bspw. an über Kettenräder umlaufenden Transportketten festgelegt sein. Damit insbesondere bei Transportsystemen, bei denen die Mitnehmer während eines Umlaufs ein oder mehrmals gewendet werden, der Mitnehmer sicher auf Wendehebel oder ähnliche Vorrichtungen aufläuft, ist dieser vorzugsweise gemäß Anspruch 9 ausgebildet.

Weitere Merkmale und Vorteile der Erfindung ergeben sich aus der nachfolgenden Beschreibung eines Ausführungsbeispiels anhand der beigefügten Figuren. Dabei zeigen:
- Fig. 1: einen erfindungsgemäßen Mitnehmer in perspektivischer Darstellung,
- Fig. 2: den Mitnehmer aus Fig. 1 in einer perspektivischen Ansicht von unten,
- Fig. 3: den Mitnehmer aus Fig. 1 in perspektivischer Explosionsdarstellung,
- Fig. 4: den Grundkörper des Mitnehmers aus Fig. 1 in zwei verschiedenen Ansichten,
- Fig. 5: eine Aufsicht auf eine Achse eines Transportsystems mit zwei daran angeordneten Mitnehmern,
- Fig. 5A: eine Schnittansicht gemäß der Schnittlinie A - A in Fig. 5,
- Fig. 5B: eine Schnittansicht gemäß der Schnittlinie B - B in Fig. 5 und
- Fig. 6: eine schematische Darstellung eines Endabschnitts eines Transportsystems mit darin integrierten, erfindungsgemäßen Mitnehmern.

In den Figuren sind gleiche Elemente mit gleichen Bezugszeichen versehen.

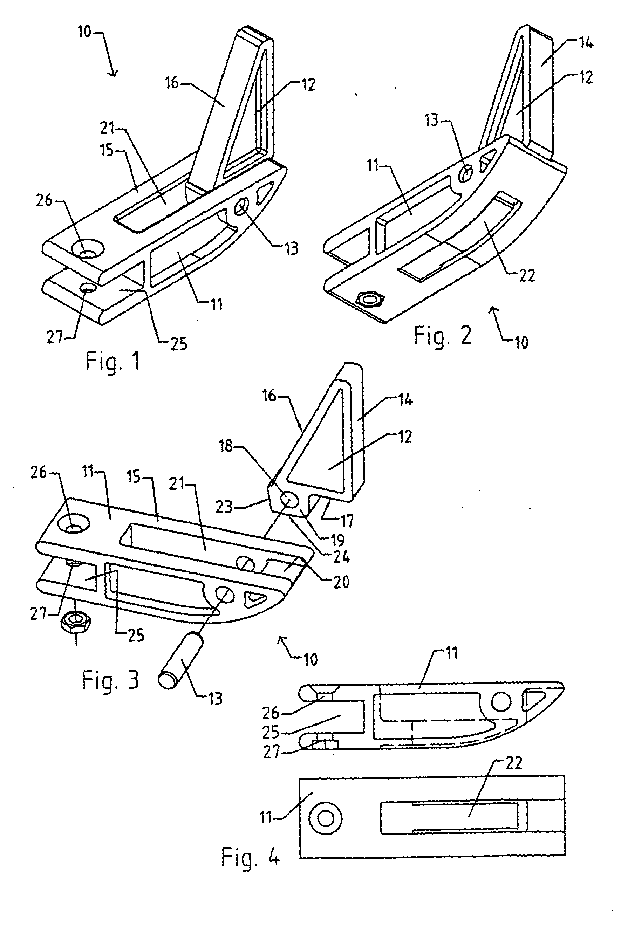

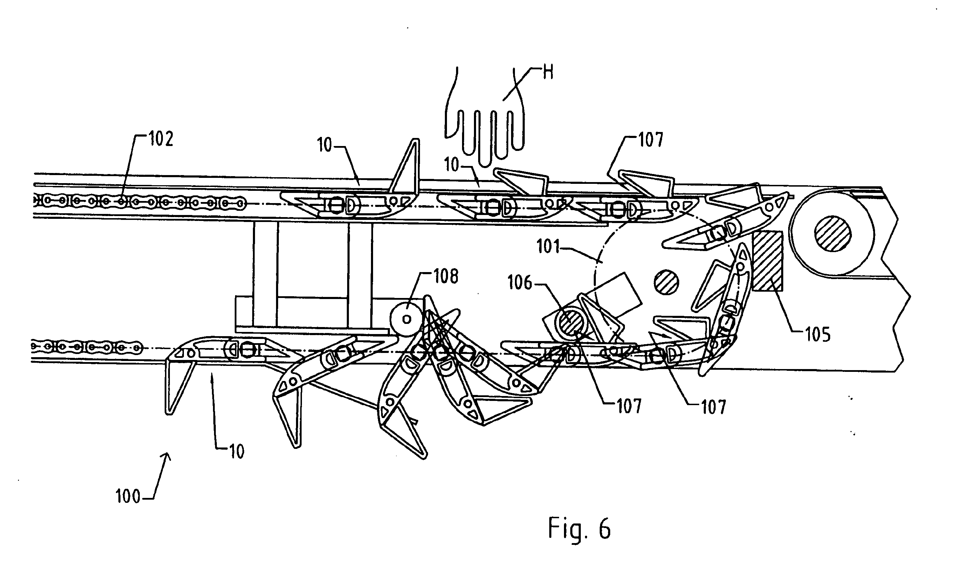

In Fign. 1 bis 3 ist ein erfindungsgemäßer Mitnehmer 10 in verschiedenen Ansichten dargestellt. Der Mitnehmer 10 ist allgemein zweiteilig aufgebaut, nämlich aus einem Grundkörper 11 und einem Mitnehmerhebel 12, die jeweils aus einem geeigneten Kunststoff bestehen. Der Grundkörper ist allgemein länglich ausgebildet, wobei die Richtung seiner längsten Erstreckung bei auf einer Achse eines Transportsystems montiertem Mitnehmer im wesentlichen parallel zu der Transportrichtung verläuft. Der Mitnehmerhebel ist im wesentlichen dreieckförmig ausgebildet mit im Dreieck angeordneten Mitnahmekante 14, Hinterkante 16 und Basiskante 17. Der Mitnehmerhebel 12 ist an dem Grundkörper 11 über eine Achse 13 schwenkbar gelagert. Dabei kann der Mitnehmerhebel 12 zwischen einer in den Fign. 1 und 2 gezeigten Mitnahmestellung, in der er mit einer Mitnahmekante 14 im wesentlichen senkrecht zu der Oberfläche 15 des Grundkörpers 11 steht, in eine Sicherheitsstellung verschwenkt werden, die in Fig. 6 zu erkennen und im Zusammenhang mit dieser näher erläutert ist. Die Achse 13 ist durch den Mitnehmerhebel 12 durch eine Öffnung 18 hindurchgeführt, die im Bereich eines an der Basiskante 17 angeformten Haltenockens 19 liegt. In der in den Fign. 1 - 3 gezeigten Mitnahmestellung bilden der dem Haltenocken 19 gegenüberliegende, vordere Abschnitt der Basiskante 17 des Mitnehmerhebels 12 und eine in dem Basiselement 11 ausgebildete Anschlagfläche 20 einen ein Überschwenken des Mitnehmerhebels verhindernden Anschlag.

In dem Grundelement 11 ist eine Nut 21 ausgebildet, in der der Mitnehmerhebel 12 aufgenommen ist. Am Grund der Nut 21 ist in dem Grundelement 11 eine mit diesem einstückig verbundene Federzunge 22 ausgebildet, die bei montiertem Mitnehmer 10 mit ihrem freien Ende gegen den Haltenocken 19 anliegt. Der Haltenocken 19 ist so geformt, daß er zwei im wesentlichen plane Rückhalteflächen 23 und 24 aufweist, an denen die Federzunge 22 bei in der Mitnahmestellung befindlichem Mitnehmerhebel 12 (Rückhaltefläche 24) und bei in der Sicherheitsstellung befindlichem Mitnehmerhebel 12 (Rückhaltefläche 23) unter Ausbildung einer Federkraft anliegt. Der Mitnehmerhebel 12 wird durch das Zusammenwirken zwischen der Federzunge 22 einerseits und dem Haltenocken 19, insbesondere den Rückhalteflächen 23 und 24, andererseits in den beiden erwähnten Grundstellungen, Mitnahmestellung und Sicherheitsstellung, gleichermaßen verrastet, er kann nur durch Aufbringen einer die Federkraft der Federzunge 22 übersteigenden Gegenkraft aus der einen Stellung in die jeweils andere Stellung bewegt werden. Sofern sich der Mitnehmerhebel 12 in einer Zwischenstellung zwischen den genannten Grundstellungen befindet, wird er durch die Form des Haltenockens 19 und durch die an diesem angreifende Federzunge 22 in eine der Grundstellungen zurück gezwungen. Die Form des Haltenockens 19 erlaubt zudem ein leichtes Überschwenken des Mitnehmerhebels 12 aus der Sicherheitsstellung heraus in die der Mitnahmestellung entgegengesetzte Richtung, wobei der Mitnehmerhebel 12 aus später näher zu erläuternden Gründen in einem solchen Fall durch die Federzunge 22 in die Sicherheitsstellung zurück gezwungen wird.

Das vordere Ende des Grundelementes 11, an dem der Mitnehmerhebel 12 gelagert ist, ist auf der dem Mitnehmerhebel 12 gegenüberliegenden Seite schiffsbugartig verjüngt ausgebildet. Dies dient dem erleichterten Auflaufen auf einen Wendebalken in dem Transportsystem, in dem der Mitnehmer 10 verwendet wird, wie später noch anhand der Fig. 6 erläutert werden wird. An seinem dem eben beschriebenen Ende gegenüberliegenden, hinteren Ende weist das Grundelement 11 eine quer zu dessen Längserstreckung und quer zu der Haupterstreckungsrichtung des Mitnehmerhebels 12 in seiner Mitnahmestellung verlaufende Befestigungsnut 25 von rechteckigem Querschnitt auf. In im wesentlichen senkrechter Richtung zu der Befestigungsnut 25 sind durch die angrenzenden Flächen des Grundelementes 11 Öffnungen 26, 27 zum Durchführen eines Befestigungsmittels, bspw. einer Schrauben-Mutternkombination vorgesehen. Im gezeigten Ausführungsbeispiel sind in den Öffnungen 26, 27 jeweils Ausnehmungen zur Aufnahme des Kopfes eines Senkkopfschraube bzw. einer Mutter ausgebildet.

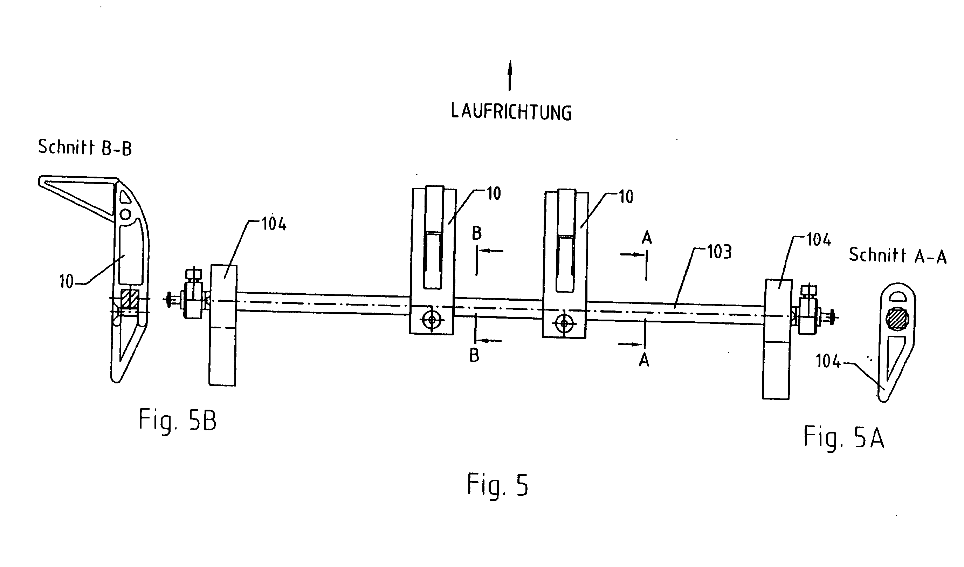

In den Fign. 5 bis 6 ist der Mitnehmer 10 in einem Transportsystem 100, bspw. einer Zusammentrag- oder Verpackungsmaschine in der Papierverarbeitung, integriert dargestellt. Das Transportsystem ist dabei als Endlossystem ausgebildet. Das in Fig. 6 schematisch in einem Ausschnitt dargestellte Transportsystem 100 enthält zwei auf Umlenkkettenrädern 101 umlaufende Ketten 102, zwischen denen in Abständen Vierkantachsen 103 verlaufen und an diesen drehbar gelagert sind. Eine solche Vierkantachse 103 mit daran angeordneten Mitnehmern 10 und Wendenocken 104 ist in den Fign. 5 bis 5B gezeigt. Hier ist zu erkennen, daß bei dem gezeigten Transportmechanismus 100 zwei nebeneinander angeordnete Mitnehmer 10 auf einer Vierkantachse 103 befestigt sind.

Gezeigt ist in Fig. 6 der Endbereich des Transportsystems 100, an dessen Ende die zu transportierenden Gegenstände einem weiteren Maschinenabschnitt, z. B. einem Transportband, übergeben werden. Gezeigt ist, wie im Oberlauf des Transportsystems 100, wo der eigentliche Transport von Gegenständen passiert, eine Hand H in den Laufweg der Mitnehmerhebel hineinragt. Laufen die Mitnehmer 10 gegen ein solches Hindernis auf oder stauen sich die zu transportierenden Gegenstände in dem Transportsystem, wird der Mitnehmerhebel gegen die Federkraft der Federzunge aus der Mitnahmestellung (in der Figur links der Hand H gezeigt) in die Sicherheitsstellung (in der Figur recht der Hand H gezeigt), in der er im wesentlichen parallel zur Transportrichtung liegt und nicht mehr bzw. nur noch unwesentlich aus dem Transportsystem vorsteht, verschwenkt und dort durch das Zusammenspiel zwischen Haltenocken und Federzunge gehalten. Die Mitnehmerhebel können somit keine Verletzungen hervorrufen bzw. einen Maschinenschaden bei einem Stau. Dies insbesondere auch, da sie nicht etwa nach Passieren eines Hindernisses wieder in die Mitnahmestellung schnellen, sondern in der Sicherheitsstellung verbleiben, bis sie aus dieser wie unten geschildert wieder aufgerichtet werden.

In Figur 6 sind auch weitere Einrichtungen des Transportsystems 100 zu erkennen, die gerade in diesem Abschnitt benötigt werden. Am Ende des Transportweges, im Bereich des Umlenkkettenrades 101 ist ein Wendebalken 105 angeordnet. Gegen diesen Balken laufen die Mitnehmer 10 mit ihren Grundelementen mit der schiffsbugartig verjüngten Seite auf, wobei die Form der Grundelemente im Zusammenspiel mit dem Wendebalken 105 ein Wenden des Mitnehmers 10 unter Drehen der Vierkantachse 103 einleitet. Das Wenden der Mitnehmer erfolgt, damit er "rückwärts" an die Aufrichtachse 106 herangeführt wird, deren Funktion nachfolgend erläutert wird.

In der eingeschwenkten Sicherheitsstellung ist zwischen der Hinterkante des Mitnehmerhebels und der Transportrichtung, bzw. der Oberkante des Grundelementes ein allgemein keilförmiger Eingriffsraum 107 gebildet. Mit der "Keilöffnung" dieses Eingriffsraumes 107 voran wird der gewendete Mitnehmer 10 im Unterlauf des Transportsystems, wo der Rücktransport der Mitnehmer 10 erfolgt, gegen die Aufrichtachse 106, die einen kreisförmigen Querschnitt aufweist, gefahren. Dabei drückt die Aufrichtachse 106 den Mitnehmerhebel an seiner Hinterkante nach oben und richtet ihn gegen die Federkraft der Federzunge aus der Sicherheitsstellung in die Mitnahmestellung auf, in der er wiederum durch die Federkraft der Federzunge gehalten wird. Abgestimmt auf diesen Schritt ist in dem Transportsystem 100 eine Wendeachse 108 angeordnet, an der im unmittelbaren Anschluß an das Aufrichten der umgeschwenkten Mitnehmerhebel die Wendenocken 104 angreifen und im Zusammenspiel mit der Wendeachse 108 ein erneutes Verdrehen der Vierkantachse 103 und damit Wenden der Mitnehmer 10 in eine Stellung bewirken, in der sie, erneut in den Oberlauf überführt, wieder Gegenstände mitnehmen können. Im Normalbetrieb, d.h., wenn die Mitnehmerhebel der Mitnehmer 10 nicht gestört und damit nicht in die Sicherheitsstellung verschwenkt werden, werden die Mitnehmer 10 wie oben geschildert zwar ebenfalls zweimal gewendet, es entfällt jedoch das Aufrichten.

Mit dem gezeigten Mitnehmer 10 wird die Verletzungsgefahr für Bedienpersonal durch einfache Mittel erheblich verringert, ohne eine den Produktionsablauf hemmende Zwangsabschaltung bemühen zu müssen. Auch bei einem Stau der zu transportierenden Gegenstände wirkt sich die offenbarte Verbesserung aus, indem eine Beschädigung der Maschine gleichermaßen einfach und dabei zuverlässig verhindert wird.

### Bezugszeichenliste

- 10: Mitnehmer
- 11: Grundkörper
- 12: Mitnehmerhebel
- 13: Achse
- 14: Mitnahmekante
- 15: Oberfläche
- 16: Hinterkante
- 17: Basiskante
- 18: Öffnung
- 19: Haltenocken
- 20: Anschlagfläche
- 21: Nut
- 22: Federzunge
- 23: Rückhaltefläche
- 24: Rückhaltefläche
- 25: Befestigungsnut
- 26: Öffnung
- 27: Öffnung
- 100: Transportsystem
- 101: Umlenkkettenrad
- 102: Kette
- 103: Vierkantachse
- 104: Wendenocken
- 105: Wendebalken
- 106: Aufrichtachse
- 107: Eingriffsraum
- 108: Wendeachse

- H: Hand

## Patentansprüche

1. Mitnehmer, insbesondere zur Verwendung in Zusammentrag- und Verpackungsmaschinen, mit einem an einem Transportsystem (100) festlegbaren Grundkörper (11) und einem eine Mitnahmekante (14) aufweisenden Mitnehmerhebel (12), der an dem Grundkörper (11) um ein Schwenklager wenigstens zwischen einer ausgeschwenkten Mitnahmestellung und einer eingeschwenkten Sicherheitsstellung verschwenkbar angeordnet ist, wobei der Mitnehmer (10) ein auf den Mitnehmerhebel (12) wirkendes Federmittel (22) aufweist, welches bei in der Mitnahmestellung befindlichem Mitnehmerhebel (12) diesen mit seiner Federkraft in der Mitnahmestellung hält, ihn aber bei einer die Federkraft übersteigenden, auf die Mitnahmekante (14) wirkenden Gegenkraft zum Verschwenken aus der Mitnahmestellung in die Sicherheitsstellung freigibt, **dadurch gekennzeichnet, dass** der Mitnehmerhebel (12) in einem von dem Grundkörper (11) vorstehenden Wirkbereich im wesentlichen dreieckig mit der in der Mitnahmestellung im wesentlichen senkrecht zur Transportrichtung verlaufenden Mitnahmekante (14), einer in Mitnehmerstellung schräg zu der Transportrichtung verlaufenden Hinterkante (16) und einer in Mitnehmerstellung an dem Grundkörper anliegenden Basiskante (17) ausgebildet ist, wobei in der Sicherheitsstellung des Mitnehmerhebels (12) zwischen der Hinterkante (16) und der Transportrichtung ein keilförmiger Eingriffsraum (107) zum Eingreifen eines Aufrichtmittels (108) zum Aufrichten des Mitnehmerhebels (12) aus der Sicherheitsstellung in die Mitnahmestellung gebildet ist.

2. Mitnehmer nach Anspruch 1, **dadurch gekennzeichnet, daß** das Federmittel (22) auf den Mitnehmerhebel (12) auch dann eine diesen in seiner Position haltende Federkraft ausübt, wenn er sich in der Sicherheitsstellung befindet, wobei der Mitnehmerhebel bei Auftreten einer die Federkraft übersteigenden Gegenkraft aus der Sicherheitsstellung in die Mitnahmestellung verschwenkt und in dieser durch die Federkraft gehalten wird.

3. Mitnehmer nach Anspruch 2, **dadurch gekennzeichnet, daß** der Mitnehmerhebel (12) über die Sicherheitsstellung hinaus entgegen der Richtung der Mitnehmerstellung weiter verschwenkbar ist, wobei er durch eine von dem Federmittel (22) ausgeübte Federkraft in die Sicherheitsstellung zurück gezwungen wird.

4. Mitnehmer nach einem der vorhergehenden Ansprüche, **dadurch gekennzeichnet, daß** der Grundkörper (11) und der Mitnehmerhebel (12) jeweils Flächen (17, 20) aufweisen, die einen ein Überschwenken verhindernden Anschlag für den Mitnehmerhebel (12) in der Mitnahmestellung bilden.

5. Mitnehmer nach einem der vorhergehenden Ansprüche, **dadurch gekennzeichnet, daß** in dem Grundkörper (11) eine Nut (21) ausgebildet ist, in der der Mitnehmerhebel (12) mit einem Lagerabschnitt einer die genannten Elemente (11, 12) durchragenden Achse (13) schwenkbar gelagert aufgenommen ist, daß der Mitnehmerhebel (12) in dem Lagerabschnitt einen, dem Boden der Nut allgemein zugewandten Haltenocken (19) aufweist, und daß als Federmittel (22) am Grund der Nut (21) ein an dem Haltenocken (19) angreifendes Federelement angeordnet ist.

6. Mitnehmer nach Anspruch 5, **dadurch gekennzeichnet, daß** der Haltenocken (19) zwei durch abgerundete Nockenflächen getrennte abgeflachte Nockenflächen (23, 24) aufweist, an denen bei in der Mitnahmestellung bzw. in der Sicherheitsstellung befindlichem Mitnehmerhebel (12) das Federelement (22) den Mitnehmerhebel (12) in seiner Position haltend angreift.

7. Mitnehmer nach einem der Ansprüche 5 oder 6, **gekennzeichnet durch** eine vorzugsweise einstückig mit dem Grundkörper (11) ausgebildete Federzunge als Federelement (22).

8. Mitnehmer nach einem der vorhergehenden Ansprüche, **dadurch gekennzeichnet, daß** der Grundkörper (11) von langgestreckter Form ist und in Richtung seiner längsten Erstreckung an einem ersten Ende mit dem Mitnehmerhebel (12) verbunden und an dem anderen, gegenüberliegenden Ende eine Befestigungsnut (25) zum Anbringen an einer quer zu der Transportrichtung verlaufenden Achse, vorzugsweise einer Vierkantachse (103), eines Transportsystems (100) aufweist, wobei im Bereich der Befestigungsnut (25) in dem Grundkörper (11) Öffnungen (26, 27) zum Einbringen von den Grundkörper (11) an der Achse (103) haltenden Befestigungsmitteln vorgesehen sind.

9. Mitnehmer nach Anspruch 8, **dadurch gekennzeichnet, daß** der Grundkörper (11) an dem ersten Ende entlang der dem aus dem Grundkörper (11) herausragenden Mitnehmerhebel (12) gegenüberliegenden Längsfläche schiffsbugartig sich verjüngend ausgebildet ist.

## Claims

1. Driver, particularly for use in collecting and packaging machines, with a body (11) securable to a conveying system (100) and a driving lever (12) having a driving edge (14) and which is located on the body (11) so as to pivot about a pivot bearing at least between a pivoted out driving position and a pivoted in safety position, the driver (10) having spring means (22) acting on the driving lever (12) and which when the latter is in the driving position maintains the same with its spring force in the driving position, but in the case of an opposing force acting on the driving edge (14) and which exceeds the spring force releases the same for pivoting out of the driving position and into the safety position, **characterized in that** in a work area projecting from the body (11) the driving lever (12) is constructed in a substantially triangular manner with a driving edge (14) running substantially perpendicular to the conveying direction in the driving position, a trailing edge (16) running in inclined manner to the conveying direction in the driving position and a base edge (17) in the driving position and in the safety position of the driving lever (12) between the trailing edge (16) and the conveying direction a wedge-shaped engagement space (107) is formed for the engaging of a raising means (108) for raising the driving lever (12) from the safety position into the driving position.

2. Driver according to claim 1, **characterized in that** the spring means (12) still exerts a spring force on the driving lever (12) holding it in its position when it is located in the safety position, the driving lever pivoting from the safety position into the driving position when there is an opposing force exceeding the spring force and is held therein by the spring force.

3. Driver according to claim 2, **characterized in that** the driving lever (12) can be pivoted beyond the safety position counter to the direction of the driving position and is forced back into the safety position by a spring force exerted by the spring means (22).

4. Driver according to one of the preceding claims, **characterized in that** the body (11) and the driving lever (12) in each case have faces (17, 20), which form a stop for the driving lever (12) in the driving position preventing overpivoting.

5. Driver according to one of the preceding claims, **characterized in that** in the body (11) is formed a slot (21) in which the driving lever (12) is received in pivotably mounted manner with a bearing section of a spindle (13) projecting through said elements (11, 12), that the driving lever (12) has in the bearing section a holding cam (19) generally facing the bottom of the slot and that as the spring means (22) on the bottom of the slot (21) is provided a spring element acting on the holding cam (19).

6. Driver according to claim 5, **characterized in that** the holding cam (19) has two flattened cam faces (23, 24) separated by rounded cam faces and on which engages the spring element (22) when the driving lever (12) is in the driving position or safety position and maintains said driving lever (12) in its position.

7. Driver according to one of the claims 5 or 6, **characterized by** a spring tongue, preferably integrally constructed with the body (11) as the spring element (22).

8. Driver according to one of the preceding claims, **characterized in that** the body (11) has an elongated shape and in the direction of its longest extension is connected at a first end to the driving lever (12) and has at the other, facing end a fixing slot (25) for fitting to a spindle, preferably a square spindle (103), of a conveying system (100) running transversely to the conveying direction and in the vicinity of the fixing slot (25) the body (11) has openings (26, 27) for the introduction of fixing means holding the body (11) on the spindle (103).

9. Driver according to claim 8, **characterized in that** the body (11) is constructed so as to taper in ship's bow-like manner on the first end along the longitudinal face facing the driving lever (12) projecting from the body (11).

## Revendications

1. Taquet d'entraînement destiné notamment à être utilisé dans des machines d'assemblage et d'emballage, comportant un corps de base (11) pouvant être fixé sur un système de transport (100), et un levier d'entraînement (12) pourvu d'un bord d'entraînement (14), lequel est disposé sur le corps de base (11) de façon à pouvoir pivoter autour d'un palier pivotant, au moins entre une position d'entraînement pivotée vers l'extérieur et une position de sécurité pivotée vers l'intérieur, le taquet d'entraînement (10) comportant un moyen à ressort (22) agissant sur le levier d'entraînement (12), qui retient le levier d'entraînement (12) dans sa position d'entraînement par sa force de ressort lorsque celui-ci se trouve dans la position d'entraînement, mais qui, lorsqu'une force antagoniste dépassant la force de ressort agit sur le bord d'entraînement (14), le libère afin qu'il puisse pivoter de la position d'entraînement dans la position de sécurité, **caractérisé en ce que**, dans une zone d'action dépassant du corps de base (11), le levier d'entraînement (12) est agencé de façon sensiblement triangulaire avec le bord d'entraînement (14) s'étendant dans la position d'entraînement pour l'essentiel perpendiculairement au sens de transport, un bord arrière (16) s'étendant dans la position d'entraînement obliquement par rapport au sens de transport, et un bord de base (17) s'appliquant dans la position d'entraînement contre le corps de base, un espace d'engagement (107) cunéiforme, pour l'engagement d'un moyen de redressement (108) destiné au redressement du levier d'entraînement (12) de la position de sécurité dans la position d'entraînement, étant formé dans la position de sécurité du levier d'entraînement (12) entre le bord arrière (16) et le sens de transport.

2. Taquet d'entraînement selon la revendication 1, **caractérisé en ce que** le moyen à ressort (22) exerce également une force de ressort sur le levier d'entraînement (12) le retenant dans sa position lorsque celui-ci se trouve dans la position de sécurité, le levier d'entraînement étant pivoté de la position de sécurité dans la position d'entraînement, et retenu dans cette dernière par la force de ressort, lors de l'apparition d'une force antagoniste dépassant la force de ressort.

3. Taquet d'entraînement selon la revendication 2, **caractérisé en ce que** le levier d'entraînement (12) peut être pivoté au-delà de la position de sécurité à l'opposé du sens de la position d'entraînement, une force de ressort exercée par le moyen à ressort (22) le forçant à revenir dans sa position de sécurité.

4. Taquet d'entraînement selon l'une des revendications précédentes, **caractérisé en ce que** le corps de base (11) et le levier d'entraînement (12) comportent chacun des surfaces (17, 20), qui forment une butée empêchant un pivotement excessif du levier d'entraînement (12) dans la position d'entraînement.

5. Taquet d'entraînement selon l'une des revendications précédentes, **caractérisé en ce qu'**une encoche (21) est pratiquée dans le corps de base (11), dans laquelle le levier d'entraînement (12) est logé avec un tronçon de palier d'un axe (13) traversant lesdits éléments (11, 12) de façon à pouvoir pivoter, **en ce que** le levier d'entraînement (12) comporte dans le tronçon de palier un ergot de retenue (19) globalement orienté vers le fond de l'encoche, et **en ce qu'**un élément à ressort agissant sur l'ergot de retenue (19) est disposé en tant que moyen à ressort (22) sur le fond de l'encoche (21).

6. Taquet d'entraînement selon la revendication 5, **caractérisé en ce que** l'ergot de retenue (19) comporte deux surfaces d'ergot aplaties (23, 24) séparées par des surfaces d'ergot arrondies, sur lesquelles agit l'élément à ressort (22) pour maintenir le levier d'entraînement (12) dans sa position lorsque le levier d'entraînement (12) se trouve dans la position d'entraînement ou dans la position de sécurité.

7. Taquet d'entraînement selon l'une des revendications 5 ou 6, **caractérisé par** une languette à ressort en tant qu'élément à ressort (22), qui est de préférence réalisée d'un seul tenant avec le corps de base (11).

8. Taquet d'entraînement selon l'une des revendications précédentes, **caractérisé en ce que** le corps de base (11) présente une forme allongée, et est relié par une première extrémité au levier d'entraînement (12) en direction de son extension la plus longue, et comporte sur l'autre extrémité opposée une encoche de fixation (25) pour la fixation sur un axe s'étendant transversalement au sens de transport, de préférence un axe quadrangulaire (103) d'un système de transport (100), des orifices (26, 27) étant pratiqués dans le corps de base (11) dans la zone de l'encoche de fixation (25) pour l'insertion de moyens de fixation retenant le corps de base (11) sur l'axe (103).

9. Taquet d'entraînement selon la revendication 8, **caractérisé en ce que**, au niveau de la première extrémité, le long de la surface longitudinale située en face du levier d'entraînement (12) dépassant du corps de base (11), le corps de base (11) est agencé en se rétrécissant en forme de proue de navire.
